(19) Europäisches Patentamt / European Patent Office / Office européen des brevets

(11) **EP 2 988 852 B1**

(12) **EUROPÄISCHE PATENTSCHRIFT**

(45) Veröffentlichungstag und Bekanntmachung des Hinweises auf die Patenterteilung:
**29.08.2018 Patentblatt 2018/35**

(21) Anmeldenummer: **14721788.9**

(22) Anmeldetag: **17.04.2014**

(51) Int Cl.:
**B01D 53/94** (2006.01)   **F01N 3/08** (2006.01)
**F02D 41/02** (2006.01)   **F02D 41/00** (2006.01)
**B01J 23/02** (2006.01)   **B01J 23/10** (2006.01)
**B01J 23/92** (2006.01)

(86) Internationale Anmeldenummer:
**PCT/EP2014/057860**

(87) Internationale Veröffentlichungsnummer:
**WO 2014/173794 (30.10.2014 Gazette 2014/44)**

(54) **ENTSCHWEFELUNG VON NOX-SPEICHERKATALYSATOREN**

DESULFURIZATION OF NOX STORAGE CATALYSTS

DÉSULFURATION DE CATALYSEURS D'ACCUMULATION DE NOX

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.04.2013 DE 102013207709**

(43) Veröffentlichungstag der Anmeldung:
**02.03.2016 Patentblatt 2016/09**

(73) Patentinhaber: **Umicore AG & Co. KG**
**63457 Hanau-Wolfgang (DE)**

(72) Erfinder:
• **ADAM, Frank**
  **63589 Linsengericht (DE)**
• **KUNERT, Susanne**
  **64342 Seeheim-Jugenheim (DE)**
• **ECKHOFF, Stephan**
  **63755 Alzenau (DE)**
• **LAMMARCK, Christian**
  **63538 Grosskrotzenburg (DE)**

(56) Entgegenhaltungen:
EP-A2- 0 945 608   DE-A1- 19 827 195
US-A- 4 965 243   US-A- 5 075 275
US-B1- 6 350 421

EP 2 988 852 B1

**Beschreibung**

Die vorliegende Erfindung bezieht sich auf die Verwendung eines bestimmten Verfahrens zur gezielten Entschwefelung bestimmter Stickoxidspeicherkatalysatoren (NOx-Speicherkatalysatoren). Insbesondere richtet sich diese Erfindung auf die Anwendung eines angepassten Verfahrens auf speziell zusammengesetzte Speicherkatalysatoren.

Zukünftige Abgasgesetzgebungen limitieren die Menge an Stickoxiden (NOx) im Abgas von Magermotoren so weit, dass eine katalytische Nachbehandlung der Stickoxide notwendig wird. Die anvisierte Reduktion der Stickoxide zu Stickstoff ist wegen des hohen Sauerstoffgehaltes im Abgas von mager betriebenen Verbrennungsmotoren allerdings schwierig. Bekannte Verfahren beruhen entweder auf dem Einsatz von Stickoxidspeicherkatalysatoren (NOx Storage Catalyst, NSC, LNT) oder sind Verfahren zur selektiven katalytischen Reduktion (Selective Catalytic Reduktion, SCR), meist mittels Ammoniak als Reduktionsmittel, an einem geeigneten Katalysator, kurz SCR-Katalysator. Es sind auch Kombinationen dieser Verfahren bekannt, worin beispielsweise an einem vorgeschalteten Stickoxidspeicherkatalysator unter fetten Betriebsbedingungen Ammoniak als Sekundäremission erzeugt wird, der in einem abströmseitig angeordneten SCR-Katalysator zunächst gespeichert und in einer sich anschließenden mageren Betriebsphase zur Reduktion von den Stickoxidspeicherkatalysator passierenden Stickoxiden genutzt wird. Die DE 102007060623 A1 beschreibt eine Reihe von im Stand der Technik vorhandenen Varianten an Abgasreinigungssystemen mit Entstickungseinrichtungen.

Stickoxidspeicherkatalysatoren werden schon jetzt zur Entfernung der im mageren Abgas von so genannten Magermotoren (Diesel, Lean-GDI) enthaltenen Stickoxide verwendet. Dabei beruht die Reinigungswirkung darauf, dass in einer mageren Betriebsphase (Speicherphase, Magerbetrieb) des Motors die Stickoxide vom Speichermaterial des Speicherkatalysators in Form von Nitraten gespeichert werden. In einer darauf folgenden fetten Betriebsphase (Regenerationsphase, Fettbetrieb, DeNOx Phase) des Motors werden die zuvor gebildeten Nitrate zersetzt und die wieder freiwerdenden Stickoxide mit den reduzierend wirkenden, fetten Bestandteilen des Abgases am Speicherkatalysator zu Stickstoff, Kohlendioxid und Wasser umgesetzt. Als fette Bestandteile des Abgases werden unter anderem reduzierend wirkende Kohlenwasserstoffe, Kohlenmonoxid, Ammoniak und Wasserstoff bezeichnet.

Die Arbeitsweise von Stickoxidspeicherkatalysatoren wird ausführlich in der SAE-Schrift SAE 950809 beschrieben. Die Zusammensetzung von Stickoxidspeicherkatalysatoren ist dem Fachmann hinreichend bekannt. Bei den normalerweise eingesetzten Stickoxidspeichermaterialien handelt es sich in der Regel um basische Verbindungen der Alkali- oder Erdalkalimetalle wie zum Beispiel Oxide, Hydroxide oder Carbonate des Bariums und Strontiums, die auf geeigneten Trägermaterialien in fein verteilter Form aufgebracht sind. Geeignete Trägermaterialien für die Speicherkomponenten sind temperaturstabile Metalloxide mit hoher Oberfläche. Darüber hinaus weist ein Stickoxidspeicherkatalysator noch katalytisch aktive Edelmetalle der Platingruppe und ggf. Sauerstoff-Speichermaterialien auf (DE502006004606D1). Diese Zusammensetzung verleiht einem Stickoxidspeicherkatalysator unter stöchiometrischen Betriebsbedingungen die Funktion eines Dreiweg-Katalysators (DE102010033689A1 sowie dort zitierte Literatur).

Die Speicherphase für Stickoxide (Magerbetrieb) dauert gewöhnlich 100 bis 2000 Sekunden und hängt von der Speicherkapazität des Katalysators und der Konzentration der Stickoxide im Abgas ab. Bei gealterten Katalysatoren mit verminderter Speicherkapazität kann die Dauer der Speicherphase aber auch auf 50 Sekunden und weniger absinken. Die Regenerationsphase (Fettbetrieb) ist dagegen immer wesentlich kürzer und dauert nur wenige Sekunden (5s - 20s). Das während der Regeneration aus dem Stickoxidspeicherkatalysator austretende Abgas weist im Wesentlichen keine Schadstoffe mehr auf und ist annähernd stöchiometrisch zusammengesetzt. Seine Luftzahl λ (Lambda: zeigt das Verhältnis von Kraftstoff zu Luft im Abgas an - siehe unten) ist während dieser Zeit nahezu gleich 1. Zum Ende der Regenerationsphase reichen die freigesetzten Stickoxide und der an den Sauerstoff-Speicherkomponenten des Katalysators gebundene Sauerstoff nicht mehr aus, um alle fetten Abgasbestandteile zu oxidieren. Es kommt daher zu einem Durchbruch dieser Bestandteile durch den Katalysator und die Luftzahl sinkt auf einen Wert unter 1 stromab des Stickoxidspeicherkatalysators. Dieser Durchbruch zeigt das Ende der Regeneration an und kann mit Hilfe einer so genannten Lambda-Sonde hinter dem Speicherkatalysator registriert werden.

Stickoxidspeicherkatalysatoren werden in ihrer Funktion beeinträchtigt durch im Kraftstoff und Motoröl enthaltene Schwefelverbindungen. Diese zumeist in organischen Schwefelverbindungen vorliegenden Bestandteile werden im Brennraum des Motors überwiegend zu Schwefeldioxid $SO_2$ umgesetzt, das dann mit dem Abgas zum Stickoxidspeicherkatalysator gelangt. In Analogie zum Speichermechanismus für Stickoxide wird $SO_2$ an der katalytisch aktiven Komponente zu $SO_3$ oxidiert und dann unter Bildung der korrespondierenden Sulfate in das Stickoxidspeichermaterial eingelagert. Mit zunehmender Einlagerung der Stickoxide und Schwefeloxide ins Speichermaterial nimmt die Speicherkapazität des Materials ab. Die durch die Einlagerung von Stickoxiden gebildeten Nitrate können wie beschrieben durch die kurzzeitige Anfettung des Abgases zu Stickoxiden ($NO_x$) zersetzt und unter Verwendung von Kohlenmonoxid, Wasserstoff und Kohlenwasserstoffen als Reduktionsmittel zu Stickstoff unter Bildung von Wasser und Kohlendioxid reduziert werden. Da die durch die Einlagerung der Schwefeloxide gebildeten Sulfate thermisch stabiler sind als die entsprechenden Nitrate, führt die Speicherung von Schwefeloxiden bei normalen Betriebsbedingungen zu einer Vergiftung des Stickoxidspeicherkatalysators, die auch bei reduzierenden Abgasbedingungen in der Regel erst bei hohen Temperaturen reversibel ist. Bei hohen Schwefelgehalten im Kraftstoff (> 10 ppm) müssen Stickoxidspeicherkatalysatoren deshalb häufig ebenfalls entschwefelt werden. Hierzu muss das Abgas auf Entschwefelungsbedingungen gebracht werden, das heißt, es muss angefettet und seine Temperatur angehoben werden. Die Luftzahl Lambda ($\lambda$) des Abgases sollte auf einen Wert unter 0,98, bevorzugt auf unter 0,95 abgesenkt und die Abgastemperatur auf einen Wert zwischen 600 bis 750 °C gebracht werden. Unter diesen Bedingungen werden die gebildeten Sulfate zersetzt und als Schwefelwasserstoff oder bevorzugt als Schwefeldioxid emittiert (DE502007006908 D1).

Bei Belastung eines Stickoxidspeicherkatalysators mit einem schwefelhaltigen Abgas muss der Speicherkatalysator also neben der regelmäßigen Regeneration zur Entfernung der gespeicherten Stickoxide auch von Zeit zu Zeit entschwefelt werden, um eine kontinuierliche Verschlechterung der Stickoxidspeicherkapazität durch gebildete Sulfate rückgängig zu machen. Das Intervall zwischen zwei Entschwefelungen hängt vom Schwefelgehalt des Kraftstoffs ab, beträgt jedoch auch bei hohen Schwefelgehalten in der Regel noch mehrere Betriebsstunden des Motors und ist damit wesentlich größer als das Intervall zwischen zwei Regenerationen zur Entfernung der gespeicherten Stickoxide. Für die Entschwefelung werden gewöhnlich 2 bis 10 Minuten benötigt. Sie dauert somit ebenfalls länger als die Stickoxid-Regeneration des Speicherkatalysators.

Die häufige Entschwefelung geht zu Lasten des Kraftstoffverbrauchs und führt wegen der notwendigen hohen Abgastemperaturen zu einer schnellen Alterung der Katalysatoren. Deshalb werden Kraftfahrzeuge mit mager betriebenen Ottomotoren bislang nur auf dem europäischen Markt verkauft, da hier Kraftstoffe mit einem Schwefelgehalt von weniger als 10 ppm angeboten werden. In den USA ist die Abgasgesetzgebung zwar besonders streng, der Schwefelgehalt im Kraftstoff für Ottomotoren liegt jedoch hier zurzeit noch bei bis zu 30 ppm. In anderen Regionen liegt der Schwefelgehalt im Kraftstoff noch deutlich höher.

Die Entwicklung von Kraftfahrzeugen mit mager betriebenen Ottomotoren für Märkte mit hohem Schwefelgehalt im Kraftstoff muss also berücksichtigen, dass in diesem Fall die Stickoxidspeicherkatalysatoren häufig entschwefelt werden müssen. Zu den schon erwähnten Nachteilen der häufigen Entschwefelung, nämlich dem erhöhten Kraftstoffverbrauch und der hohen Temperaturbelastung der Katalysatoren, tritt als weiterer Nachteil eine hohe Emission von Kohlenwasserstoffen und Stickoxiden während der Entschwefelung auf, denn das fette Abgas während der Entschwefelung enthält hohe Konzentrationen an unverbrannten Kohlenwasserstoffen, Kohlenmonoxid und Stickoxiden sowie an den Katalysatoren aus den Stickoxiden gebildeten Ammoniak aber kaum Sauerstoff, um diese Abgaskomponenten an den Katalysatoren umzusetzen. Sie werden daher als Schadstoffe ungereinigt an die Umgebung abgegeben.

Die amerikanische Abgasgesetzgebung schreibt allerdings vor, dass die ohnehin schon sehr niedrigen Grenzwerte für Kohlenwasserstoffe, Kohlenmonoxid und Stickoxide auch unter Berücksichtigung der Entschwefelung der Stickoxidspeicherkatalysatoren eingehalten werden müssen. Die Emissionen während der Entschwefelung von Stickoxidspeicherkatalysatoren werden zu diesem Zweck umgelegt auf den gesamten für die Emissionsmessungen vorgesehenen Fahrzyklus. Es hat sich gezeigt, dass schon die Emissionen während einer einzigen Entschwefelung von Stickoxidspeicherkatalysatoren über den vorgeschriebenen Grenzwerten für sogenannte SULEV-Fahrzeuge (SULEV = Super Ultra Low Emission Vehicle) liegen können.

Die Forschung im Hinblick auf die Entwicklung neuer Stickoxidspeicherkatalysatoren geht demnach in die Richtung, Speichermedien zu entwickeln, die leichter - sprich bei niedrigerer Temperatur und geringeren Emissionen an Schadstoffen - entschwefelt werden können. Einen Ansatzpunkt in diese Richtung geht die WO08043604A1. Diese Erfindung stellt ein Verfahren vor, durch dessen Anwendung die Entschwefelungstemperatur herkömmlicher Stickoxidspeicherkatalysatoren, die eine Platinkomponente und wenigstens ein Stickoxidspeichermaterial enthalten, abgesenkt werden kann. Dabei wird die Basizität der chemischen Umgebung des Platins abgesenkt, während das Stickoxidspeichermaterial als solches unverändert bleiben kann. Weiterhin wird ein aus der Anwendung des Verfahrens resultierender, verbesserter Stickoxidspeicherkatalysator mit abgesenkter Entschwefelungstemperatur vorgestellt. Solche Katalysatoren eignen sich besonders für die Stickoxidnachbehandlung der Abgase von Dieselmotoren. Allerdings ist auch bei diesen Speicherkatalysatoren immer noch eine Temperatur von über 550°C von Nöten, um einen angemessenen Schwefelaustrag sicherzustellen. Daher war es die Aufgabe der vorliegenden Erfindung, weitere Möglichkeiten aufzuzeigen, wie ansonsten vergleichbar gute Stickoxidspeicherkatalysatoren effektiv und möglichst unter Einsparung von Kraftstoff regeneriert werden können. Diese und weitere sich aus dem Stand der Technik ergebende Aufgaben werden durch die Verwendung eines besonderen Verfahrens zur Entschwefelung speziell ausgestalteter Stickoxidspeicherkatalysatoren gemäß Anspruch 1 gelöst. Bevorzugte Ausgestaltungen der erfindungsgemäßen Verwendung sind in den von Anspruch 1 abhängigen Unteransprüchen angesprochen.

Dadurch, dass man ein Verfahren zur gezielten Entschwefelung von NOx-Speicherkatalysatoren, welche zur Abgasreinigung von überwiegend mager verbrennenden Benzinmotoren eingesetzt werden und die Cer- und Erdalkalimetall-haltige Stickoxidspeichermaterialien aufweisen, verwendet, wobei die NOx-Speicherkatalysatoren ein Gewichtsverhältnis an Cer-haltigen zu Erdalkalimetall-haltigen Stickoxidspeichermaterialien von 10:1 bis 20:1 (bezogen auf $CeO_2$:Erdalkalimetalloxid) aufweisen und man diese bei erhöhten Temperaturen von $\geq$ 500°C im Mittel im A/F-Bereich von 0,99 $\leq \lambda \leq$ 1,0 entschwefelt, gelangt man überraschend einfach, dafür aber nicht minder vorteilhaft zur Lösung der gestellten Aufgabe. Es hat sich herausgestellt, dass das beschriebene Verfahren zur Entschwefelung von Stickoxidspeichermaterialien ganz besonders gut auf Speicherkatalysatoren anzuwenden ist, deren Speicherkomponente hauptsächlich, aber nicht ausschließlich aus Cer-haltigen Speicherbausteinen aufgebaut ist. In den erfindungsgemäßen A/F-Bereichen wirkt der Stickoxidspeicherkatalysator als Dreiwegkatalysator, so dass die primären Abgase hauptsächlich als Kohlendioxid, Wasser und Stickstoff die Abgasreinigung verlassen. Eine zusätzliche kraftstoffintensive Aufheizung und gleichzeitige Anfettung des Abgases, wie es bei normalen Stickoxidspeicherkatalysatoren unumgänglich ist, kann in bestimmten Fahrsituationen (Autobahnfahrt) unterbleiben. Hier ist der Stickoxidspeicherkatalysator schon ausreichend heiß. Durch das gezielte Einstellen eines stöchiometrischen bis ganz leicht fetten Abgasgemisches kann die Entschwefelung effizient durchgeführt werden. Dies hilft zum einen, Kraftstoff zu sparen. Es hat sich allerdings des Weiteren herausgestellt, dass unter den anvisierten Bedingungen der im Stickoxidspeicherkatalysator enthaltene Schwefel überwiegend als $SO_2$ emittiert wird. Eine durch bei der Regeneration normalerweise gebildetes $H_2S$ verursachte Geruchsbelästigung wird daher weitestgehend unterdrückt.

Stickoxidspeicherkatalysatoren sind dem Fachmann hinlänglich bekannt. In Bezug auf ihre Funktionsweise und Ausgestaltung wird auf die einschlägige Literatur verwiesen (WO13008342A1, WO12140784A1, WO2005092481A, EP1317953A1, EP1016448B1, EP1321186B1, EP1911506A sowie EP1101528A). Als Speicherkomponenten in Stickoxidspeicherkatalysatoren werden vorwiegend die basischen Oxide der Alkalimetalle, der Erdalkalimetalle, insbesondere aber Bariumoxid, und der Seltenerdmetalle, insbesondere Ceroxid, eingesetzt, welche mit Stickstoffdioxid zu den entsprechenden Nitraten reagieren. Als Cer-haltiges Speichermaterial kommt bevorzugt ein solches ausgewählt aus der Gruppe bestehend aus Ceroxid, ein Cer-Zirkon-Mischoxid, ein mit Seltenen Erden dotiertes Ceroxid und Kombinationen davon in Frage. Bevorzugt erfolgt eine Dotierung des Cer/Zirkon-Mischoxids mit 0,5 bis 10 Gew.-% Lanthan- und/oder Praseodymoxid, bezogen auf das Gesamtgewicht von Cer/Zirkon-Mischoxid und Lanthan- und/oder Praseodymoxid. Bevorzugte basische Speichermaterialien, wie z. B. Erdalkalimetall-haltige Stickoxidspeichermaterialien, sind Verbindungen enthaltend Mg, Ba, Sr, Ca. Es ist bekannt, dass diese Materialien an Luft zum überwiegenden Teil in Form von Carbonaten und Hydroxiden vorliegen. Diese Verbindungen eignen sich ebenfalls zur Speicherung der Stickoxide. Wenn daher im Rahmen der Erfindung von den basischen Erdalkalimetall-haltigen Speichermaterialien gesprochen wird, so sind damit auch die entsprechenden Carbonate und Hydroxide eingeschlossen. Als katalytisch aktive Komponenten werden gewöhnlich die Edelmetalle der Platingruppe (z.B. Pt, Pd, Rh) verwendet, die wie die Speicherkomponente auf einem Trägermaterial abgeschieden werden. Geeignete Trägermaterialien für die Komponenten sind temperaturstabile Metalloxide mit hoher Oberfläche von mehr als 10 $m^2$/g, die eine hochdisperse Abscheidung der Speicherkomponenten ermöglichen. Geeignet sind beispielsweise Ceroxid und Cer-haltige Mischoxide, Aluminiumoxid, Magnesiumoxid, Magnesium-Aluminium-Mischoxide, Seltene Erden und einige ternäre Oxide. Als Trägermaterial wird überwiegend aktives, hochoberflächiges Aluminiumoxid eingesetzt. Der durch Anwendung des beschriebenen Verfahrens vorteilhaft einsetzbare Stickoxidspeicherkatalysator wird als Wandbeschichtung (Coating) in seinen bevorzugten Ausführungsformen auf einem inerten Tragkörper aus Keramik oder Metall aufgebracht. Als Tragkörper für automobile Anwendungen sind Durchflusswabenkörper aus Keramik oder Metall gut geeignet. Der hier ins Auge gefasste Stickoxidspeicherkatalysator kann auch auf oder in einem Partikelfilter als Tragkörper vorliegen (EP1837497A1, EP1398069A2, DE102009039249A). Der Terminus "auf oder in" bezeichnet dabei die Möglichkeit einer Beschichtung auf der Wand oder in den porösen Hohlräumen derselben.

Neben den oben angesprochenen Speichermaterialien enthalten die vorliegenden Stickoxidspeicherkatalysatoren wie gesagt auch Edelmetalle. Der Fachmann orientiert sich bzgl. der Menge und Art an den eingangs zu den Katalysatoren notierten Stand der Technik. Als Edelmetalle werden vorzugsweise solche ausgewählt aus der Gruppe bestehend aus Palladium, Platin und Rhodium eingesetzt. Die Mengenverhältnisse können nach dem Fachmann zur Verfügung stehenden Wissenstand entsprechend gewählt werden, vorteilhafter Weise liegt der Gehalt an Platin im Speichermaterial bei 30 - 150, bevorzugt bei 40 - 100 und ganz besonders bei 50 - 70 g/cft. Im Hinblick auf Palladium ergeben sich Werte von 10 - 150, bevorzugt 20 - 100 und ganz besonders bevorzugt 30 - 80 g/cft. Auch das Rhodium ist in einer Menge von 0,5 - 10, bevorzugt 1 - 8 und ganz bevorzugt 1 - 5 g/cft im Katalysatormaterial zugegen. Das Verhältnis der Metalle zueinander liegt bei 50 - 100 : 10 - 50 : 1 - 5 (Pt : Pd : Rh), vorzugsweise bei 70 - 90 : 12 - 30 : 2 - 4 und besonders bevorzugt um 80 : 16 : 3 (jeweils $\pm$10%).

Erfindungsgemäß besitzt der vorgeschlagene Stickoxidspeicherkatalysator ein bestimmtes Verhältnis von Cer-haltigen zu Erdalkalimetall-haltigen Speichermaterialien. Das Verhältnis von 10:1 bis 20:1 bezieht sich dabei auf das Gewicht der Oxide dieser beiden Komponenten ($CeO_2$:Erdalkalimetalloxid). Bevorzugt beträgt das Verhältnis 12:1 bis 19:1 und ganz besonders bevorzugt liegt es zwischen 12,5:1 und 18:1. Eine Entschwefelung eines derart aufgebauten Stickoxidspeicherkatalysators erfolgt schon bei Temperaturen von ≥ 500° - 800°C, bevorzugt 550° - 700°C, und ganz besonders bevorzugt zwischen 600°C bis 650°C.

Die gezielte Entschwefelung wird erfindungsgemäße bei einem bestimmten Luft/Kraftstoffverhältnis (Luftzahl, A/F-Verhältnis) durchgeführt. Das Verbrennungsluftverhältnis (A/F) setzt die tatsächlich für eine Verbrennung zur Verfügung stehende Luftmasse $m_{L,tats}$ ins Verhältnis zur mindestens notwendigen stöchiometrischen Luftmasse $m_{L,st}$, die für eine vollständige Verbrennung benötigt wird:

$$\lambda = \frac{m_{L,tats}}{m_{L,st}}$$

Ist die Luftzahl $\lambda = 1$, so gilt das Verhältnis als stöchiometrisches Verbrennungsluftverhältnis mit $m_{L,tats}$ = $m_{L,st}$; das ist der Fall, wenn alle Brennstoff-Moleküle theoretisch vollständig mit dem Luftsauerstoff reagieren, ohne dass Sauerstoff fehlt oder unverbrannter Sauerstoff übrig bleibt.

Für Verbrennungsmotoren gilt:

$\lambda < 1$ (z. B. 0,9) bedeutet "Luftmangel": fettes oder auch reiches Gemisch

$\lambda > 1$ (z. B. 1,1) bedeutet "Luftüberschuss": mageres oder auch armes Gemisch

Aussage: $\lambda = 1,1$ bedeutet, dass 10% mehr Luft an der Verbrennung teilnimmt, als zur stöchiometrischen Reaktion notwendig wäre. Dies ist gleichzeitig der Luftüberschuss.

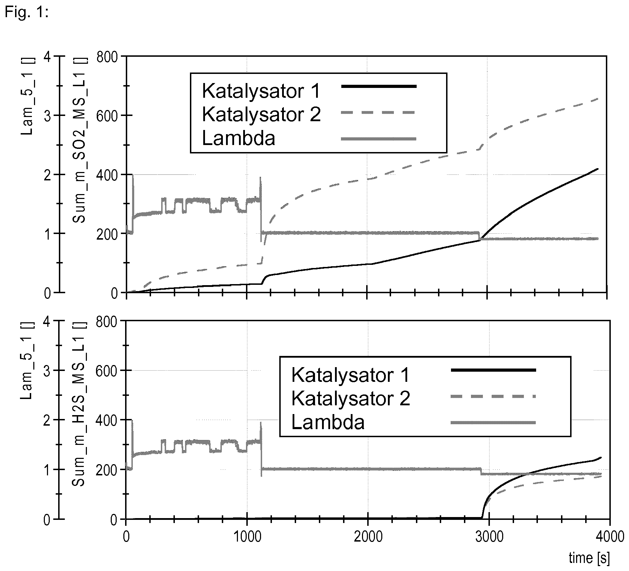

Erfindungsgemäß wird das vorliegende Verfahren bei einer Luftzahl von im Mittel $0,99 \leq \lambda \leq 1,0$ und bevorzugt bei $0,995 \leq \lambda \leq 1,0$ ausgeführt. Hierdurch und durch den Einsatz besagter Stickoxidspeicherkatalysatoren lässt sich die Emission an Schwefelwasserstoff deutlich erniedrigen (Fig. 1). Es ist dabei besonders vorteilhaft, wenn die eingestellte Luftzahl während der Entschwefelung mit einer bestimmten Frequenz moduliert wird. Diese Frequenz liegt vorteilhafter Weise zwischen 0,5 - 20, bevorzugt zwischen 1 - 12 und ganz besonders bevorzugt zwischen 1 - 5 Hz. Gleichzeitig bietet sich an, die Modulation hinsichtlich der Luftzahl mit einer Amplitude innerhalb eines Bereichs von ± 0,05, bevorzugt ± 0,01 und ganz besonders bevorzugt innerhalb eines Bereichs um ± 0,005 durchzuführen.

Mit den vorgeschlagenen Speicherkatalysatoren und dem dazu angepassten Verfahren - insbesondere unter Zuhilfenahme der oben beschriebenen Modulation - ist es möglich, die Entschwefelung bei Betriebszuständen von mager laufenden Benzinmotoren gezielt durchführen zu können, die nahe an normalen Fahrsituationen eines entsprechenden Fahrzeugs angelehnt sind. Die im Verfahren anvisierten A/F-Bereiche werden bei dieser Art von Motoren im Hochlastbereich (z.B. schnelle Autobahnfahrt) fast automatisch erreicht, weshalb die Entschwefelung bei den dann vorherrschenden Temperaturen mit nur geringen weiteren Maßnahmen automatisch mitablaufen kann. Dergestalt ist es demnach möglich und ganz besonders vorteilhaft, eine ausreichende Entschwefelung des Stickoxidspeicherkatalysators zu erreichen, ohne dass das Abgas zur Entschwefelung zusätzlich durch motorische Maßnahmen aufgeheizt werden muss. Insbesondere muss das Abgas zur ausreichenden Entschwefelung der Stickoxidspeicherkatalysatoren nicht zusätzlich angefettet werden, um damit die Temperatur des Speicherkatalysators auf Entschwefelungstemperatur zu bringen. In solchen Fahrsituationen kann die gezielte und auch ausreichende, erfindungsgemäße Entschwefelung überaus bevorzugt dann erfolgen, wenn der mager verbrennende Benzinmotor nahe dem oben angegebenen A/F-Bereich betrieben wird. Unter ausreichend wird erfindungsgemäß ein Entschwefelungsgrad von >50%, bevorzugt > 60% und ganz bevorzugt > 70% bezogen auf den im Katalysator gespeicherten Schwefel verstanden.

Eine äußerst bevorzugte Ausführungsform der vorliegenden Erfindung bildet ein Verfahren, bei dem man zur Entschwefelung eine bestimmte Abfolge von folgenden Verfahrensschritten einhält. Dabei hat es sich als günstig erwiesen, wenn alternierend zumindest 4 Betriebsphasen des Motors sich abwechseln, wobei eine magere Phase gefolgt wird von einer Entschwefelungsphase ($\lambda$ = 0,995 - 1,0 (Amplitude innerhalb ± 0,005)) und wobei die einzelnen Betriebsphasen eine Dauer im Bereich von 5 - 30 min aufweisen. Vorteilhafter Weise kann die magere Betriebsphase ggf. um den Faktor 2 - 6 kürzer sein als die Entschwefelungsphase. Besonders bevorzugt in diesem Zusammenhang ist eine Abfolge von Betriebsphasen zur Entschwefelung wie folgt:

- magere Fahrweise für mindestens 5 - 10 min;

- A/F = 0,995 - 1,0 (Amplitude innerhalb ± 0,005) für mindestens 10 - 20 min;

- magere Fahrweise für mindestens 2 - 5 min;

- A/F = 0,995 - 1,0 (Amplitude innerhalb ± 0,005) für mindestens 10 - 30 min..

Mittels einer solchen Entschwefelungsstrategie ist es möglich, den Stickoxidspeicherkatalysator optimal und effektiv, zumindest aber ausreichend von gespeicherten Schwefeloxiden zu befreien. Es sei bemerkt, dass bei derartigem Vorgehen, der Schwefel hauptsächlich als Schwefeldioxid emittiert wird und dieser Vorgang daher nicht zu einer Geruchsbelästigung durch gebildetes $H_2S$ führt. Die hier vorgeschlagene Entschwefelungsstrategie wird bevorzugt in dem Temperaturintervall von 600°C bis 650°C durchgeführt.

Es sei angemerkt, dass in NOx-Speicherkatalystoren $CeO_2$ sowohl als Trägeroxid als auch als NOx-Speichermaterial verwendet wird. Sofern vorliegend das Verhältnis von $CeO_2$:Erdalkalimetaloxid betrachtet wird, so wird hier ausschließlich solches $CeO_2$ mitbetrachtet, welches befähigt ist, NOx in ausreichendem Maße zu speichern. Dies ist z.B. nicht der Fall, wenn das $CeO_2$ in z.B. einer Spinellstruktur mit anderen Oxiden, z.B. MgO oder $Al_2O_3$ vorliegt. Als ausreichend wird daher nur ein $CeO_2$-Speichermaterial angesehen, welches befähigt ist, mindestens 2, vorzugsweise mindestens 3 und ganz besonders bevorzugt mindestens 3,5mg NOx/g allein bezogen auf das Ceroxid bei T<200°C zu speichern.

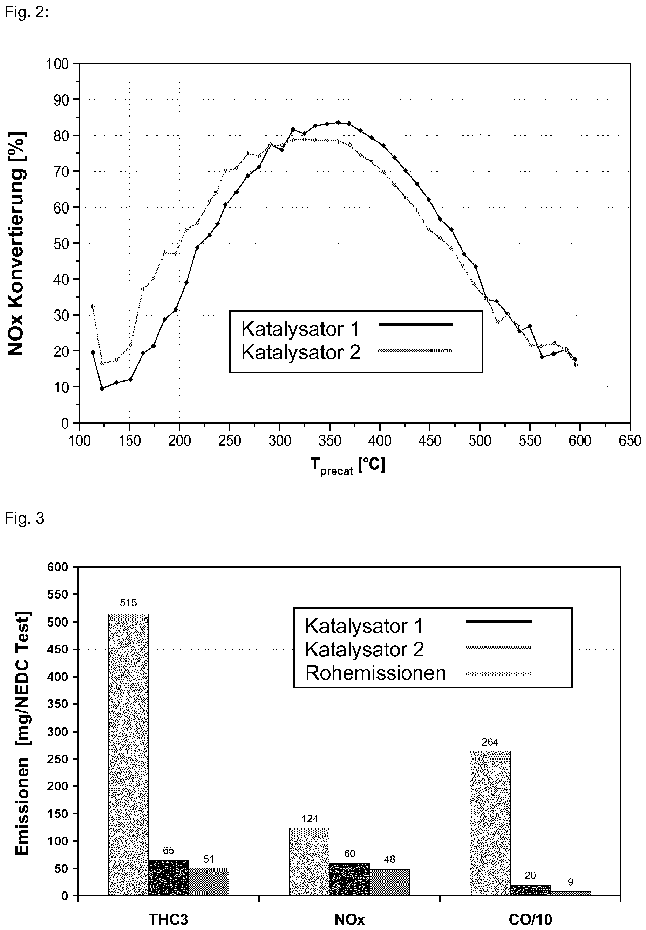

Mit dem hier vorgestellten Stickoxidspeicherkatalysator ist es möglich, nahe am stöchiometrischen Punkt eine ausreichende Entschwefelung zu erreichen, wie es mit normalen Stickoxidspeicherkatalysatoren, bei denen das Verhältnis von Cer-haltigen zu Erdalkalimetall-haltigen Speichermaterialien in oxydischer Form <10:1 beträgt, nicht entsprechend gut möglich ist. Bevorzugt liegt die Entschwefelungsrate (Geschwindigkeit des Schwefelaustrags) bei einem Stickoxidspeicherkatalysatoren mit einem Anteil an Cer-haltigen zu Erdalkalimetall-haltigen Speichermaterialien von 10:1 bis 20:1 (im Test Katalysator 2 - $CeO_2$:Erdalkalimetalloxid-Gewichtsverhältnis von 12,5:1) bei Temperaturen von 600°C - 650°C und einer Luftzahl von $\lambda$ = 1 um den Faktor zwei, bevorzugt um den Faktor drei und ganz besonders bevorzugt um den Faktor vier höher als bei einem Stickoxidspeicherkatalysator, der ein entsprechendes Verhältnis von z.B. 9,4:1 (Katalysator 1) aufweist (Fig. 1). Gleichzeitig ist zu verzeichnen, dass die hier vorgestellten Stickoxidspeicherkatalysatoren ein zu geringeren Temperaturen verschobenes Speicherfenster für NOx (Fig. 2) aufweisen, was darauf hindeutet, dass auch die Schwefeloxide bei geringeren Temperaturen gespeichert und auch desorbiert werden können. Dies ist vor dem Hintergrund der immer kälter werdenden Verbrennung auch von mager verbrennenden Benzinmotoren besonders vorteilhaft. Dabei ist zu beachten, dass mit den ins Auge gefassten Stickoxidspeicherkatalysatoren keine Einbuße hinsichtlich der NOx-Performance zu verzeichnen ist (Fig. 3).

Mit dem vorliegenden Verfahren ist es möglich, bestimmte Speicherkatalysatoren gezielt und besonders vorteilhaft zu entschwefeln. Dies ist im Hinblick auf den Kraftstoffverbrauch wichtig. Die gezielte Entschwefelung erfolgt vorzugsweise während normaler Fahrsituation, die ein heißes Abgas bedingen. Eine extra durchgeführte Aufheizung des Stickoxidspeichers ist dann nicht von Nöten. Auch die Generierung von übel riechendem Schwefelwasserstoff ist weitgehend unterdrückt. Vor diesem Hintergrund scheint das erfindungsgemäße Verfahren besonders vorteilhaft zu sein, wobei es jedoch vom bekannten Stand der Technik in keinster Weise nahegelegt wird.

Figuren:

Fig. 1: Entschwefelungsverhalten im Temperaturfenster 600-650°C der beiden Katalysatoren (Katalysator 1 und Katalysator 2) bei Lambda >1, Lambda=1 und Lambda=0,9

Fig. 2: NOx-Speicherfenster der getesteten Katalysatoren; Katalysator 2 zeigt besseren NOx-Umsatz bei tieferen Temperaturen

Fig. 3: Absoluter Umsatz von Schadgasen (Rohemissionen) durch Katalysatoren 1 und 2

Beispiele:

Zur Herstellung des Katalysators 2 wird ein wabenförmiger Keramikträger mit einer ersten Washcoatschicht A beschichtet, die Pt, Pd und Rh geträgert auf einem Lanthan-stabilisiertem Alumina, Ceroxid in einer Menge 116 g/l, sowie 17 g/l Bariumoxid und 15 g/l Magnesiumoxid enthält. Die Beladung von Pt und Pd beträgt dabei 50 g/cft (1,766 g/l) und 5 g/cft (0,177 g/l) und die Gesamtbeladung der Washcoatschicht 181 g/l bezogen auf das Volumen des Keramik-Trägers. Auf die erste Washcoatschicht wird eine weitere Washcoatschicht B aufgebracht, die ebenfalls Pt und Pd sowie Rh geträgert auf einem Lanthan-stabilisiertem Alumina enthält. Die Beladung von Pt, Pd und Rh in dieser Washcoatschicht beträgt 50 g/cft (1,766 g/l), 5 g/cft (0,177 g/l) und 5 g/cft (0,177 g/l). Die Washcoatschicht B enthält außerdem 93 g/l Ceroxid bei einer Washcoatbeladung der Schicht B von 181 g/l.

Der Katalysator 1 wird wie in der WO2008043604 (Beispiel 1) angegeben so hergestellt, dass das Verhältnis von $CeO_2$:BaO in der Speicherkomponente bei 9,4:1 liegt. Die Menge an eingesetztem BaO beträgt 17 g/l.

Versuchsbeschreibung zu Fig. 1

Die Versuchsdurchführung erfolgt an einem hochdynamischen Motorprüfstand. Bei dem Motor handelt es sich um einen direkteinspritzenden Benzinmotor mit strahlgeführtem, geschichtet betriebenem Brennverfahren. Es wird bei einem konstanten Motorbetriebspunkt und moderaten Katalysatortemperaturen (250-350°C) mittels hochverschwefeltem Karftstoff (200 ppm Schwefel) jeweils definierte Schwefelmengen auf den Katalysator aufgebracht (SOx Vorgang).

Danach wird über ein vorgegebenes Last/Drehzahl-Kollektiv die Entschwefelungstemperatur (DeSOx-Temperatur 600-650°C) eingestellt. Um sicherzustellen, dass Schwefel nicht schon während der Aufheizphase freigesetzt wird, erfolgt das Einstellen der Temperatur bei Lambda>>1. Nach Erreichen der DeSOx-Temperatur werden verschiedene Lambdaeinstellungen (konstant als auch fett/mager Variationen) eingestellt. Der jeweils eingestellte Lambdawert wird über einen festgelegten Zeitraum konstant gehalten. Dabei werden mittels FTIR freiwerdende Schwefelkomponenten aufgezeichnet (DeSOx Vorgang).

Versuchsbeschreibung zu Fig. 2

Die Versuchsdurchführung erfolgt an einer dynamischen Synthesegasanlage mit synthetisch hergestelltem Abgas. In dem Versuch wird der aufgeheizte Katalysator 1 bzw. 2 mit einer Rate von 7,5°C/min abgekühlt. Während der Abkühlprozedur wird in einem festgelegten Zeitfenster zwischen Einspeicherung und Regeneration (Ausspeicherung) gewechselt. Die dabei als konstant festgelegte NOx Konzentration beträgt 500ppm. Die Auswertung erfolgt jeweils über einen mager/fett Zyklus und zeigt den Umsatz abhängig von der Katalysatortemperatur und relativ zu der Eingangskonzentration von 500 ppm NOx.

Versuchsbeschreibung zu Fig. 3

Die Versuchsdurchführung erfolgt an einer hochdynamischen Synthesegasanlage. Hierbei wird ein Fahrzeugemissionsprofil (Emissionen, Temperaturen, Massenströme, Katalysatorvolumen des Fahrzeugs etc.) im festgelegtem Maßstab 1:5-1:50 auf die Synthesegasanlage übertragen (appliziert) und beide Katalysatoren (1 und 2) auf ihr Umsatzverhalten getestet. Es ist in verschiedenen Quervergleichen zwischen Synthesegasanlage und Fahrzeug erwiesen, dass das Umsatzverhalten im entsprechenden Maßstab gut korreliert.

**Patentansprüche**

1. Verfahren zur gezielten Entschwefelung von NOx-Speicherkatalysatoren, welche zur Abgasreinigung von überwiegend mager verbrennenden Benzinmotoren eingesetzt werden, wobei die NOx-Speicherkatalysatoren Cer- und Erdalkalimetall-haltige Stickoxidspeichermaterialien im Gewichtsverhältnis bezogen auf $CeO_2$:Erdalkalimetalloxid von Cer-haltigen zu Erdalkalimetall-haltigen Stickoxidspeichermaterialien von 10:1 bis 20:1 aufweisen, **dadurch gekennzeichnet, dass** diese bei ≥500°C im Mittel im A/F-Bereich von $0,99 \leq \lambda \leq 1,0$ entschwefelt werden.

2. Verfahren nach Anspruch 1, **dadurch gekennzeichnet, dass** die NOx-Speicherkatalysatoren Cer-haltige Stickoxidspeichermaterialien ausgewählt aus der Gruppe bestehend aus Ceroxid, ein Cer-Zirkon-Mischoxid, ein mit Seltenen Erden dotiertes Ceroxid und Kombinationen davon aufweist.

3. Verfahren nach Anspruch 1 und/oder Anspruch 2, **dadurch gekennzeichnet, dass** die NOx-Speicherkatalysatoren Erdalkalimetall-haltige Stickoxidspeichermaterialien aufweisen, wobei die Erdalkalimetalle in diesen Materialien ausgewählt sind aus der Gruppe bestehend aus Barium, Calcium, Strontium, Magnesium.

4. Verfahren nach einem oder mehreren der vorhergehenden Ansprüche, **dadurch gekennzeichnet, dass** die Temperatur während der Entschwefelung 500°C bis 800 °C beträgt.

5. Verfahren nach einem oder mehreren der vorhergehenden Ansprüche, **dadurch gekennzeichnet, dass** während der Entschwefelung die eingestellte Luftzahl mit einer Frequenz zwischen 0,5 und 20 Hz moduliert wird.

6. Verfahren nach Anspruch 5, **dadurch gekennzeichnet, dass** während der Entschwefelung die Modulation mit einer Amplitude innerhalb von ± 0,05 um die eingestellte Luftzahl (λ) herum erfolgt.

7. Verfahren nach einem oder mehreren der vorhergehenden Ansprüche, **dadurch gekennzeichnet, dass** das Abgas zur Entschwefelung der Stickoxidspeicherkatalysatoren nicht zusätzlich durch motorische Maßnahmen angefettet wird, um damit die Temperatur auf Entschwefelungstemperatur zu bringen.

8. Verfahren nach einem oder mehreren der vorhergehenden Ansprüche 1 - 6, **dadurch gekennzeichnet, dass** sich alternierend zumindest 4 Betriebsphasen des Motors abwechseln:

- magere Fahrweise für mindestens 5 - 10 min;
- A/F = 0,995 - 1,0 (Amplitude innerhalb ± 0,005) für mindestens 10 - 20 min;
- magere Fahrweise für mindestens 2 - 5 min;
- A/F = 0,995 - 1,0 (Amplitude innerhalb ± 0,005) für mindestens 10 - 30 min.

**Claims**

1. Method for the targeted desulfurization of NOx storage catalysts which are used for exhaust gas purification of predominantly lean-burning gasoline engines, wherein the NOx storage catalysts comprise cerium and alkaline earth metal-containing nitric oxide storage materials in a weight ratio of cerium-containing nitric oxide storage materials to alkaline earth metal-containing nitric oxide storage materials of 10:1 to 20:1, relative to $CeO_2$:alkaline earth metal oxide,

**characterized in that**
these are desulfurized at ≥500 °C on average in an A/F range of $0.99 \leq \lambda \leq 1.0$.

2. The method according to claim 1,
   **characterized in that**
   the NOx storage catalysts comprise cerium-containing nitric oxide storage materials selected from the group comprising cerium oxide, a cerium-zirconium mixed oxide, a cerium oxide doped with rare earths, and combinations thereof.

3. The method according to claim 1 and/or claim 2,
   **characterized in that**
   the NOx storage catalysts comprise alkaline earth-containing nitric oxide storage materials, wherein the alkaline earth metals in these materials are selected from the group comprising barium, calcium, strontium, and magnesium.

4. The method according to one or more of the previous claims,
   **characterized in that**
   the temperature during desulfurization is 500 °C to 800 °C.

5. The method according to one or more of the previous claims,
   **characterized in that**
   the adjusted air/fuel ratio during desulfurization is modulated using a frequency between 0.5 and 20 Hz.

6. The method according to claim 5,
   **characterized in that**
   during desulfurization the modulation is performed at an amplitude within ± 0.05 of the adjusted air/fuel ratio (A).

7. The method according to one or more of the previous claims,
   **characterized in that**
   the exhaust gas for the desulfurization of the nitric oxide storage catalysts is not additionally enriched by engine-related measures in order to thereby bring the temperature up to the desulfurization temperature.

8. The method according to one or more of previous claims 1 - 6,
   **characterized in that**
   at least 4 operating phases of the engine rotate alternately:

   - lean mode of operation for at least 5 - 10 min;
   - A/F = 0.995 - 1.0 (amplitude within ± 0.005) for at least 10 - 20 min;
   - lean mode of operation for at least 2 - 5 min;

   - A/F = 0.995 -1.0 (amplitude within ± 0.005) for at least 10 - 30 min.

**Revendications**

1. Procédé de désulfuration ciblée de catalyseurs-accumulateurs de NOx, qui sont utilisés pour l'épuration des gaz d'échappement de moteurs à essence en régime majoritairement pauvre, les catalyseurs-accumulateurs de NOx
   présentant des matériaux accumulateurs d'oxyde d'azote contenant du cérium et du métal alcalino-terreux dans un rapport pondéral, rapporté à $CeO_2$: oxyde de métal alcalino-terreux, de matériaux accumulateurs d'oxyde d'azote contenant du cérium à ceux contenant du métal alcalino-terreux de 10:1 à 20:1,
   **caractérisé en ce que**
   ceux-ci sont désulfurés à ≥ 500 °C en moyenne dans la plage A/F de $0,99 \leq \lambda \leq 1,0$.

2. Procédé selon la revendication 1,
   **caractérisé en ce que**
   les catalyseurs-accumulateurs de NOx présentent des matériaux accumulateurs d'oxyde d'azote contenant du cérium choisis dans le groupe constitué d'oxyde de cérium, d'un oxyde mixte de cérium-zirconium, d'un oxyde de cérium dopé par des terres rares et des combinaisons de ceux-ci.

3. Procédé selon la revendication 1 et/ou la revendication 2,
   **caractérisé en ce que**
   les catalyseurs-accumulateurs de NOx présentent des matériaux accumulateurs d'oxyde d'azote contenant du métal alcalino-terreux, les métaux alcalino-terreux dans ces matériaux étant choisis dans le groupe constitué de baryum, de calcium, de strontium, de magnésium.

4. Procédé selon l'une ou plusieurs des revendications précédentes,
   **caractérisé en ce que**
   la température pendant la désulfuration est de 500 °C à 800 °C.

5. Procédé selon l'une ou plusieurs des revendications précédentes,
   **caractérisé en ce que**
   pendant la désulfuration le coefficient d'air réglé est modulé à une fréquence entre 0,5 et 20 Hz.

6. Procédé selon la revendication 5,
   **caractérisé en ce que**
   pendant la désulfuration la modulation s'effectue à une amplitude de ± 0,05 μm autour du coefficient d'air (λ) réglé

**7.** Procédé selon l'une ou plusieurs des revendications précédentes,
**caractérisé en ce que**
le gaz d'échappement n'est pas additionnellement enrichi par des mesures au niveau du moteur pour la désulfuration des catalyseurs-accumulateurs d'oxyde d'azote, pour amener ainsi la température à la température de désulfuration.

**8.** Procédé selon l'une ou plusieurs des revendications 1 à 6,
**caractérisé en ce que**
au moins quatre phases de fonctionnement du moteur se succèdent de manière alternée :

régime pauvre pendant au moins 5 à 10 min ;
- A/F = 0,995 à 1,0 (Amplitude dans la fourchette ± 0,005) pendant au moins 10 à 20 min ;
régime pauvre pendant au moins 2 à 5 min ;
- A/F = 0,995 à 1,0 (Amplitude dans la fourchette ± 0,005) pendant au moins 10 à 30 min.

Fig. 1:

Fig. 2:

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102007060623 A1
- DE 502006004606 D1
- DE 102010033689 A1
- DE 502007006908 D1
- WO 08043604 A1
- WO 13008342 A1
- WO 12140784 A1
- WO 2005092481 A
- EP 1317953 A1
- EP 1016448 B1
- EP 1321186 B1
- EP 1911506 A
- EP 1101528 A
- EP 1837497 A1
- EP 1398069 A2
- DE 102009039249 A
- WO 2008043604 A